# EUROPEAN PATENT SPECIFICATION

(11) **EP 0 588 645 B1**
(45) Date of publication and mention of the grant of the patent: **19.04.2000**
(21) Application number: 93307328.0
(22) Date of filing: 16.09.1993
(51) Int. Cl.: G08B 13/191

(54) **Thermal image detecting apparatus**
Thermische Bilddetektierungsvorrichtung
Dispositif détecteur d'image thermique

(30) Priority: 17.09.1992 JP 24747092
(43) Date of publication of application: 23.03.1994
(73) Proprietor: MATSUSHITA ELECTRIC INDUSTRIAL CO., LTD., Kadoma-shi, Osaka-fu, 571 (JP)
(72) Inventor: Deguchi, Takashi, Kusatsu-shi (JP); Chinomi, Takahito, Yasu-gun, Shiga-ken (JP); Shimizu, Makoto, Yamashina-ku, Kyoto-shi (JP); Mukai, Yasuhito, Otsu-shi (JP)
(74) Representative: Votier, Sidney David

(56) References cited:
- EP-A- 0 501 253
- WO-A-92/10819

## Description

### BACKGROUND OF THE INVENTION

The present invention relates to apparatus for detecting a radiation temperature or a human behaviour, and in particular to apparatus for detecting a temperature distribution or human behaviour in a home living room, with the use of a thermal image.

Conventionally, a quantum-type infrared sensor and a thermal type infrared sensor have been used in order to detect temperature in a non-contact manner. The quantum-type infrared sensor is highly sensitive so as to be highly responsive, but requires cooling (down to about -200 deg.C) and accordingly has limited suitability. The thermal-type infrared sensor is less sensitive and therefore less responsive, but does not require cooling, and accordingly, it has been commercially available.

Among various thermal-type infrared sensors, a pyroelectric-type infrared sensor has been frequently used.

Such a pyroelectric-type infrared sensor has a differential variation output characteristic, that is, it delivers an output only when the input temperature varies. This pyroelectric-type infrared sensor normally incorporates a compound eye type lens and a shutter adapted to be periodically opened and closed, and accordingly, it detects a time-varied input resulting from the radiation temperature of a human body in periodic bursts. Accordingly, the pyroelectric-type infrared sensor delivers its output in synchronization with the above-mentioned time-varied input.

Furthermore, it has been proposed that these pyroelectric infrared sensors are arranged two-dimensionally in order to provide a means for obtaining a two-dimensional image.

However, a two-dimensional array of pyroelectric infrared sensors results in a complicated system arrangement.

EP-A-0501253 describes a fire detection apparatus for monitoring an extended area from an elevated location comprising an arrangement as defined in the preamble to Claim 1.

It would be desirable to provide an apparatus for detecting a highly precise thermal image with a relatively simple system arrangement.

In accordance with the present invention there is provided a thermal image detecting apparatus as defined in Claim 1.

According to a preferred form of the present invention, the sizes of the pyroelectric type heat detecting elements in the array are different from one other so as provide different viewing angles over which the elements scan.

According to another preferred form of the present invention, the widths of the heat detecting elements in the array are different from each other so as to compensate for the optical aberration of the optical system in order to maintain a constant widthwise viewing angle of the elements through the optical system.

With the above-mentioned arrangement of the present invention, in which the optical system and the pyroelectric-type heat-detecting elements arranged on a straight line inclined at a predetermined angle to a vertical axis, the substantially horizontal lengths of the elements are short, but the substantially vertical lengths of the elements are long.

Furthermore, according to another preferred form of the present invention, the spaces between the elements are uniform.

Alternatively, the spaces between the elements may be different.

The rotational speed with which the array of pyroelectric type heat detecting elements are rotated about the rotary shaft while measuring a temperature is set to be larger than the horizontal viewing angle over which each of the elements scans during every measurement divided by the time required for the measurement.

The rotational speed may be set to be twice as high as the horizontal viewing angle over which each of the elements scans during every measurement divided by the time required for the measurement.

With the above-mentioned arrangement in which the array of pyroelectric-type heat-detecting elements and the optical system are rotated integrally with each other, it is possible to provide an apparatus for detecting a two-dimensional thermal image, which is simple in its structure but has a high degree of accuracy and a high performance.

Other features and advantages of the invention will be apparent from the following description taken in connection with the accompanying drawings, wherein:

### BRIEF DESCRIPTION OF THE DRAWINGS:

Fig. 1 is a schematic view illustrating an arrangement in which an array of pyroelectric-type heat detecting elements and a lens are integrally incorporated with each other;
Fig. 2 is a view illustrating an array of pyroelectric-type heat detecting elements having different sizes;
Fig. 3 is an explanatory view showing the optical aberration of a wide-angle lens;
Fig. 4 is a view illustrating an array of pyroelectric-type heat-detecting elements having different widths;
Fig. 5 is a view showing a vertical light distribution in the case of the inclination of the array of the pyroelectric-type heat-detecting elements;
Figs. 6a to 6b are views illustrating a vertical light distribution and the array of pyroelectric-type heat-detecting elements wherein the elements are arranged at uniform intervals;
Figs. 7a to 7b are views illustrating a vertical light distribution and the array of pyroelectric-type heat-detecting elements wherein the rate of blind zones is set to be constant; and
Figs. 8a to 8b are views illustrating horizontal image data.

### DESCRIPTION OF THE PREFERRED EMBODIMENTS

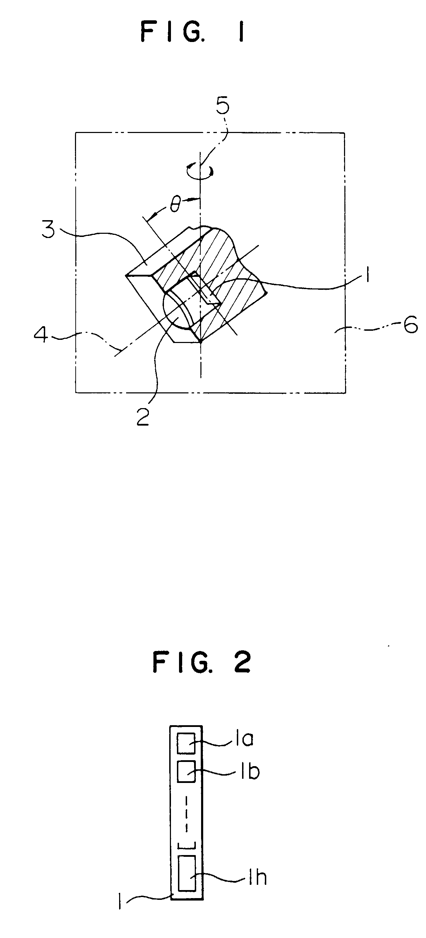

Explanation will be made of two-dimensional thermal image detecting apparatus in a preferred embodiment of the present invention with reference to Figs. 1 to 8b.

Referring to Figs. 1 and 2, there are shown an array 1 of pyroelectric-type heat-detecting elements 1a to 1h (which will be simply denoted as "elements"), a structural body 3 in which the elements 1a to 1h and a lens 2 are integrally incorporated with each other. It is noted that the array 1 of the elements is in a plane substantially orthogonal to the optical axis 4 of the lens 2. The structural body 3 is rotated about a rotary shaft 5. The thermal image detecting apparatus comprising the components 1 to 5 is generally denoted by reference numeral 6.

Fig. 2 shows an example of an array in which the elements have different sizes. In this arrangement, the element 1h is longer than the element 1a in the longitudinal direction in which the elements 1a to 1h are one-dimensionally arranged. The different sizes of the elements cause the spacial fields of views projected onto the elements to be different from one another, in combination with the lens 2. This fact will be hereinbelow explained.

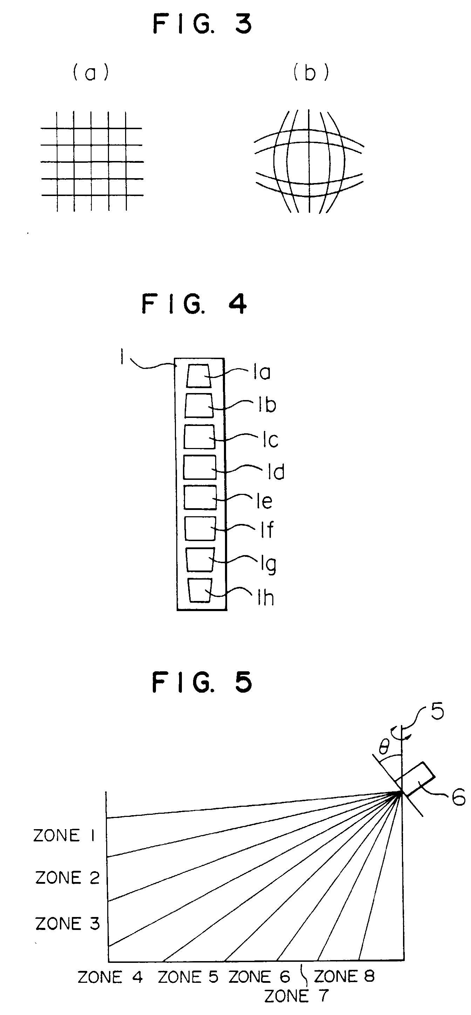

Fig. 3 is a view for explaining the optical aberration which results when a lattice pattern is viewed through the lens 2. That is, when the lattice pattern (a) is viewed through the wide lens, a projected pattern (b) having a deformed periphery can be seen.

Fig. 4 shows an embodiment in which the widths of the elements are changed in order to compensate the widthwise optical aberration. Accordingly, the elements in this configuration provide an image having a uniform viewing angle in combination with the lens 2.

Fig. 5 shows a vertical light distribution which is obtained by the array 1 of elements which are arranged on a straight line inclined at a predetermined angle θ to a vertical axis. In combination with the lens 2, the elements 1a to 1h scan zones 1 to 8 which are shown in a vertical plane. In the arrangement shown in Fig. 5 in which the thermal image detecting apparatus 6 monitors a living room, the nearer to the apparatus 6, the larger a human body to be monitored is observed; and
the further from the apparatus 6, the smaller the human body is observed. Accordingly, in the case where uniform vertical viewing angles are allocated to the zones 1 to 8, the zones are large in comparison with the human body if the human body is far from the apparatus, that is, the number of zones from which the image of the human body can be obtained is low. On the contrary, if the human body is near to the apparatus, the number of zones from which the image of the human body is obtained is large. In general, the resolution of the image becomes worse if the human body is far from the apparatus, but becomes satisfactory if the human body is near to the apparatus. In order to resolve this problem effectively, the viewing angle of zone 1 is set to be smaller than that of zone 8. Accordingly, it is possible to balance the resolution of the image between the human body near to the apparatus and the human body far from the same. Since the array 1 of the elements is incorporated integrally with the lens 2, the vertical viewing angles of the zones can be changed from one another by changing the lengths of the elements. That is, the length of the element 1a corresponding to the zone 1 having a small viewing angle is set to be short, and the length of the element 1h corresponding to the zone 8 having a large viewing angle is set to be long.

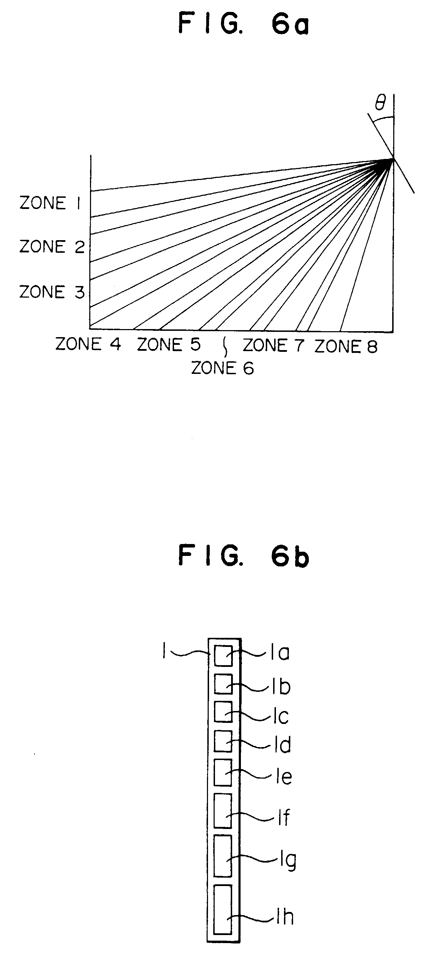

Fig. 6a shows the light distribution where the spaces between the adjacent elements are set to be uniform, and Fig. 6b shows the array 1 of the elements. If vertical viewing angles the elements do not scan, that is, vertical blind zones are set to be as small as possible, the intervals of the elements are set to the uniform minimum value with which the array of the elements can be produced, and accordingly, it is possible to reduce the effect of the vertical blind zones. Furthermore, as shown in Fig. 6a, the degree of the vertical blind zones corresponding to the spaces between the adjacent elements is proportional to the distance from the thermal image detecting apparatus 6. Accordingly, if the spaces between the elements are set to be uniform, the nearer to the thermal image detecting apparatus 6, the smaller the vertical blind zones, and vice versa. Meanwhile, since the degrees of the zones become larger at a position far from the thermal image detecting apparatus 6, the proportion of the background image other than the human body image becomes larger per zone. If the human body is near to the apparatus, the image of the human body can be obtained from several zones, and accordingly, either one of the zones is substantially occupied by the human body. Accordingly, it the human body is far from the apparatus, the human body image is faded by the background image so that the detection ability is reduced.

Thus it is necessary to precisely detect the human body by appropriately setting the vertical blind zones caused by the spaces between the elements. In Fig. 6a, the spaces between the elements are set to be uniform, but zone 8 is set to be larger than zone 1. That is, since the element 1h is longer than the element 1a, the rate of the vertical blind zone becomes larger along zone 1. Thus, the image of the human body located at the centre of the area 1 can be more precisely detected. However, if the human body is present within the vertical blind zone, the image of the human body can hardly be detected, but since the human body usually moves, no particular problem occurs if the detection is made continuously. Further, the rate of the vertical blind zone along the area 8 is small, and accordingly, since a large area can be measured, it can be expected to enhance the accuracy of the measurement. Furthermore, the vertical blind zones can be decreased as far as possible by setting the spaces between the elements to a lower limit value with which the array of the elements can be produced, while maintaining the above-mentioned function.

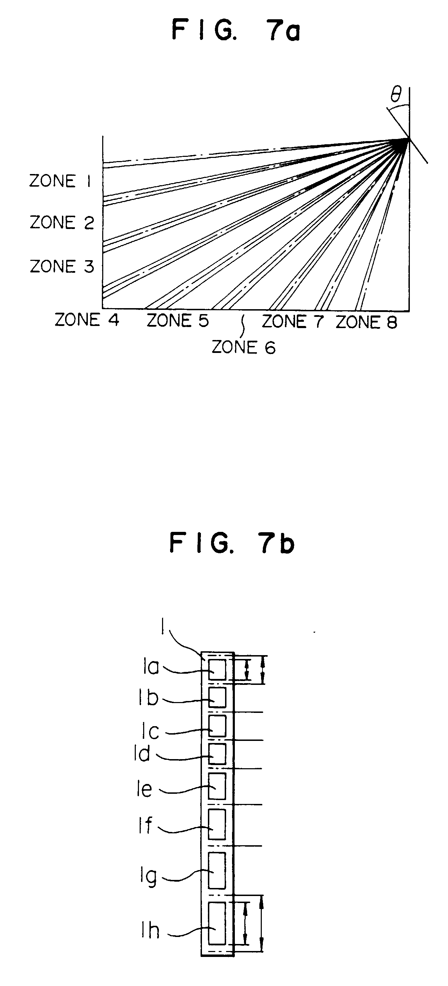

Figs. 7a to 7b show an embodiment in which the rates of the vertical blind zones are set to be uniform along the zones. In particular, Fig. 7a shows a light distribution in this example, and Fig. 7b shows an array 1 of elements. The sizes of the zones 1 to 8 are changed, similar to that shown in Fig. 6. Since the rate of an image per zone is set to be uniform, the rate between the vertical blind zone and the vertical detecting zone per zone is st to be constant. Since the rate of the image occupying each zone is set to be constant, the image of a human body positioned at the centre of the zone 1 can be precisely detected, but an exothermic body smaller than the human body, such as a pet, for example, a cat, can be precisely detected in the zone 8.

The horizontal array of image data is detected successively by the elements when the array 1 of the elements and the lens 2 are rotated integrally with each other in a horizontal direction about the rotary shaft 5 while the temperature is measured so as to obtain a two-dimensional image.

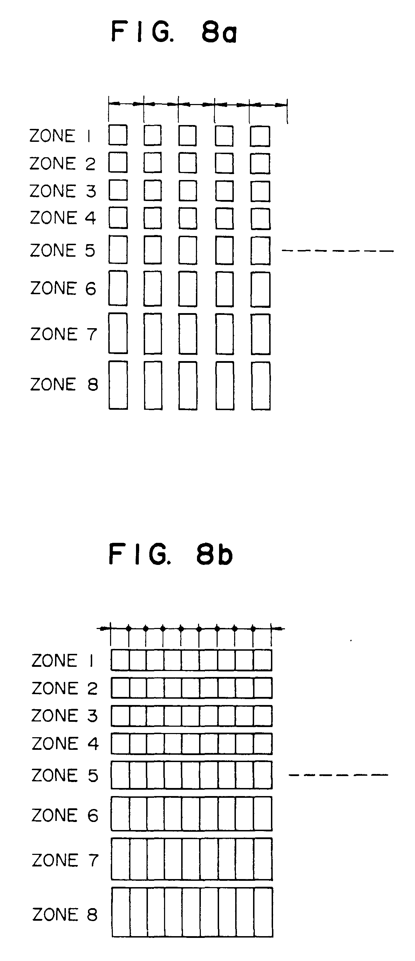

Specifically, Fig. 8a shows an array of image data where the rotational speed is set to be substantially twice as high as a horizontal viewing angle which is determined by the width of the elements, and Fig. 8b shows, in contrast, in an arrangement which does not fall within the scope of the present invention, an array of image data where the rotational speed is set to be substantially equal to the horizontal viewing angle which is determined by the width of the elements. The data shown in Fig. 8a can be obtained over a range which is twice as large as a range over which the data shown in Fig. 8b is obtained, within an equal detection time period. Further, the horizontal blind zone becomes one-half so that a resolution suitable for the detection of a human body can be obtained.

Furthermore, the horizontal viewing angle of the thermal image detecting apparatus can be optionally set without the number of total image data being altered, by suitably selecting a scale factor for the horizontal viewing angle which is determined by the width of the elements.

Furthermore, it is possible to obtain precise image data from Figs. 8a to 8b. With the use of the image data shown in Figs. 8a and 8b in combination, an approximate place where the human body is present is at first detected from the image data shown in Fig. 8a, and then, data such as a temperature and a position of the detected human body can be then detected from the image data shown in Fig. 8b.

The size of the elements may be different from each other in the longitudinal direction, so that the vertical viewing angles which the elements can scan are changed.

When the spaces between the elements are set to be uniform, the blind zones can be set to be as small as possible, and accordingly, the effect thereof can be reduced.

Alternatively, when the spaces between the elements are different from each other, the vertical blind zones can be suitably set, and accordingly, a human body and a small exothermic body such as a pet can be precisely detected.

When the horizontal lengths of the elements are short and the vertical lengths of the elements are long, and the spaces between the elements are set to be constant, the image of a human body located at the centre of a zone which is nearly horizontal can be precisely detected while the accuracy of the measurement can be enhanced in a zone which is nearly vertical.

Since the speed at which the array of the pyroelectric-type heat detecting elements is rotated while a temperature is detected is set to be higher than the horizontal viewing angle of the elements during every measurement, the horizontal viewing angle of the thermal image detecting apparatus can be optionally set without changing the number of total image data.

When the rotational speed is set to be substantially twice as high as the horizontal viewing angle over which the elements can scan, the horizontal blind zones are reduced to one half so as to obtain a resolution suitable for detection of a human body.

## Claims

1. A thermal image detecting apparatus for obtaining a two-dimensional thermal image, comprising an array of heat-detecting elements (1a-1h) arranged one-dimensionally on a straight line, an optical system integrally incorporated with said array of heat-detecting elements, and a rotary shaft (5) which is parallel to or inclined at a predetermined angle from said straight line, whereby said array of heat-detecting elements (1a-1h) and said optical system are arranged to be rotated about said rotary shaft (5) while said array of heat-detecting elements (1a-1h) detects temperature, the sizes of said heat-detecting elements (1a-1h) being different from one another; characterised in that:
said heat-detecting elements (1a-1h) are pyroelectric-type heat-detecting elements and said optical system comprises an optical axis (4) which is aligned with the longitudinal centre of the array of heat-detecting elements (1a-1h); and in that
the speed at which the array of pyroelectric-type heat-detecting elements (1a-1h) is arranged to be rotated about said rotary shaft (5) while measurement is made is set to be larger than a horizontal viewing angle over which each of said elements (1a-1h) can scan during every measurement divided by the time required for said measurement.

2. An apparatus as set forth in claim 1, wherein the sizes of said elements (1a-1h) are different from each other in the longitudinal direction in which said elements (1a-1h) are arranged one-dimensionally.

3. An apparatus as set forth in claim 1, wherein the sizes of said elements (1a-1h) are different from each other at least in the widthwise direction so as to compensate an optical aberration of the optical system, whereby the widthwise viewing angles of said elements (1a-1h) through said optical system are set to be constant.

4. An apparatus as set forth in claim 2, wherein said straight line is inclined by a predetermined angle from a horizontal axis, the horizontal lengths of said elements (1a-1h) are short, but the vertical lengths of said elements (1a-1h) are long.

5. An apparatus as set forth in any preceding claim, wherein the spaces between said elements (1a-1h) are substantially constant.

6. An apparatus as set forth in any one of claims 1 to 4, wherein the spaces between said elements (1a-1h) are different from one another.

7. An apparatus as set forth in any preceding claim, wherein said rotational speed is set to be substantially twice as high as the horizontal viewing angle over which each of said elements (1a-1h) can scan during every measurement divided by the time required for said measurement.

## Patentansprüche

1. Wärmebilderfassungsvorrichtung zum Ermitteln eines zweidimensionalen Wärmebildes, die aufweist ein Feld von Wärmeerfassungselementen (1a - 1h), die eindimensional entlang einer geraden Linie angeordnet sind, ein integral mit dem Feld Wärmeerfassungselemente zusammengefaßtes optisches System und eine Drehachse (5), die parallel zu der oder in einem vorbestimmten Winkel verkippt ist gegenüber der geraden Linie, wodurch das Feld Wärmeerfassungselemente (1a - 1h) und das optische System dazu ausgelegt sind, um die Drehachse (5) gedreht zu werden, während das Feld Wärmeerfassungselemente (1a - 1h) eine Temperaturerfassung durchführt, wobei die Größen der Wärmeerfassungselemente (1a - 1h) voneinander unterschiedlich sind; dadurch gekennzeichnet, daß:
die Wärmeerfassungselemente (1a - 1h) von pyroelektrischem Typ sind und das optische System eine optische Achse (4) aufweist, die mit dem Zentrum in Längsrichtung des Feldes Wärmeerfassungselemente (1a - 1h) ausgerichtet ist; und daß
die Geschwindigkeit der Drehung um die Drehachse (5) bei Durchführung einer Messung, zu der das Feld pyroelektrische Wärmeerfassungselemente (1a - 1h) ausgelegt ist, größer eingestellt ist als der Quotient aus einem horizontalen Gesichtswinkel, den die Elemente (1a - 1h) bei jeder Messung überspannen können, und der für die Messung erforderlichen Zeit.

2. Vorrichtung nach Anspruch 1, bei der die Größen der Elemente (1a - 1h) in der Längsrichtung, in der die Elemente (1a - 1h) eindimensional angeordnet sind, voneinander verschieden sind.

3. Vorrichtung nach Anspruch 1, bei der die Größen der Elemente (1a - 1h) zumindest in der Breitenrichtung voneinander verschieden sind, um eine optische Aberration des optischen Systems zum kompensieren, wodurch die Gesichtswinkel der Elemente (1a - 1h) in Breitenrichtung durch das optische System hindurch konstant eingestellt sind.

4. Vorrichtung nach Anspruch 2, bei der die gerade Linie gegenüber einer horizontalen Achse um einen vorbestimmten Winkel verkippt ist, die horizontalen Längen der Elemente (1a - 1h) kurz, die vertikalen Längen der Elemente (1a - 1h) jedoch lang sind.

5. Vorrichtung nach einem der vorstehenden Ansprüche, bei der die Abstände zwischen den Elementen (1a - 1h) im wesentlichen konstant sind.

6. Vorrichtung nach einem der Ansprüche 1 - 4, bei der die Abstände zwischen den Elementen (1a - 1h) voneinander verschieden sind.

7. Vorrichtung nach einem der vorstehenden Ansprüche, bei dem die Drehgeschwindigkeit im wesentlichen doppelt so groß eingestellt ist wie der Quotient aus dem horizontalen Gesichtswinkel, den jedes der Elemente (1a - 1h) bei jeder Messung überspannen kann, und der für die Messung erforderlichen Zeit.

## Revendications

1. Appareil détecteur d'image thermique destiné à obtenir une image thermique bidimensionnelle, comprenant une matrice d'éléments détecteurs de chaleur (1a à 1h) disposée unidimensionnellement sur une ligne droite, un système optique intégralement incorporé avec ladite matrice d'éléments détecteurs de chaleur et un arbre rotatif (5) qui est parallèle ou incliné d'un angle prédéterminé par rapport à ladite ligne droite, d'où il résulte que ladite matrice d'éléments détecteurs de chaleur (1a à 1h) et ledit système optique sont disposés pour être pivotés autour dudit arbre rotatif (5) tandis que ladite matrice d'éléments détecteurs de chaleur (1a à 1h) détecte la température, les dimensions desdits éléments détecteurs de chaleur (1a à 1h) étant différentes les unes des autres, caractérisé en ce que :
lesdits éléments détecteurs de chaleur (1a à 1h) sont des éléments détecteurs de chaleur de type pyroélectrique et ledit système optique comprend un axe optique (4) qui est aligné avec le centre longitudinal de la matrice d'éléments détecteur de chaleur (1a à 1h) ; et en ce que
la vitesse à laquelle la matrice d'éléments détecteurs de chaleur de type pyroélectrique (1a à 1h) est disposée pour être pivotée autour dudit arbre rotatif (5) alors que la mesure est établie pour être plus importante qu'un angle de vision horizontal que chacun desdits éléments (1a à 1h)peut balayer pendant chaque mesure divisée par le temps requis pour ladite mesure.

2. Appareil selon la revendication 1, dans lequel les dimensions desdits éléments (1a à 1h) sont différentes les unes des autres dans la direction longitudinale dans laquelle lesdits éléments (1a à 1h) sont disposés unidimensionnellement.

3. Appareil selon la revendication 1, dans lequel les dimensions desdits éléments (1a à 1h) sont différentes les unes des autres, au moins dans la direction de la largeur, de façon à compenser une aberration optique du système optique, d'où il résulte que les angles de vision dans le sens de la largeur desdits éléments (1a à 1h) à travers ledit système optique sont établis pour être constants.

4. Appareil selon la revendication 2, dans lequel ladite ligne droite est inclinée d'un angle prédéterminé par rapport à un axe horizontal, les longueurs horizontales desdits éléments (1a à 1h) sont courtes, mais les longueurs verticales desdits éléments (1a à 1h) sont longues.

5. Appareil selon l'une quelconque des revendications précédentes, dans lequel les espaces entre lesdits éléments (1a à 1h) sont sensiblement constants.

6. Appareil selon l'une quelconque des revendications 1 à 4, dans lequel les espaces entre lesdits éléments (1a à 1h) sont différents les uns des autres.

7. Appareil selon l'une quelconque des revendications précédentes, dans lequel la vitesse rotative est établie pour être substantiellement deux fois plus élevée que l'angle de vision horizontal que chacun desdits éléments (1a à 1h) peut balayer pendant chaque mesure divisée par le temps requis pour ladite mesure.
